# EUROPEAN PATENT APPLICATION

(11) **EP 2 006 018 A2**
(43) Date of publication of application: **24.12.2008**
(21) Application number: 07714995.3
(22) Date of filing: 27.02.2007
(51) Int. Cl.: B01J 4/00, B01J 4/02, C01B 3/08, H01M 8/06

(54) **LIQUID CONSTANT-RATE EMITTING APPARATUS AND METHOD OF LIQUID CONSTANT-RATE EMISSION**

(30) Priority: 01.03.2006 JP 2006055285; 17.04.2006 JP 2006113398; 17.04.2006 JP 2006113416
(71) Applicant: Nitto Denko Corporation, Ibaraki-shi, Osaka 567-8680 (JP)
(72) Inventor: SUGIMOTO, Masakazu, Kyoto-shi, kyoto 6158245 (JP); YANO, Masaya, Kyoto-shi, kyoto 6158245 (JP); SUGITA, Taiichi, Kyoto-shi, kyoto 6158245 (JP)
(74) Representative: Sajda, Wolf E.
(86) International application number: PCT/JP2007/053652
(87) International publication number: WO 2007/102342

(57) **Abstract**

A liquid constant-rate emitting apparatus that in the event of delivering a liquid, such as water, from a liquid accommodating container, even when the amount thereof is small, is capable of constant-rate delivery thereof. There is provided an apparatus comprising liquid accommodating container (2) for water accommodation; water lead-out pipe (11) for water emission from the liquid accommodating container (2); gas accommodating container (1) for compressed air accommodation; and introduction pipe (6) for feeding of the compressed air within the gas accommodating container (1) into the liquid accommodating container (2), so that constant-rate water emission from the water lead-out pipe (11) is attained by application of the compressed air to the liquid within the liquid accommodating container (2).

## Description

### TECHNICAL FIELD

The present invention relates to a liquid constant-rate emitting apparatus and a method of liquid constant-rate emission for supplying a small amount of liquid at a constant rate.

### BACKGROUND ART

A fuel battery is an energy source given attention as the power generating efficiency is high and substances that pollute the atmosphere are not generated compared to other power generating systems. In a hydrogen supply fuel battery, air (oxygen) is supplied to a cathode and hydrogen is supplied to an anode to generate power. The hydrogen becomes hydrogen ions and electrons through a catalytic reaction at the anode, where the hydrogen ions move through an electrolyte, react with the oxygen by a catalytic reaction of the cathode, and becomes water. The electrons move to the cathode through an external circuit. Electric energy is generated by the movement of the electrons.

There is thus a need to supply fuel such as hydrogen to the fuel battery. Various apparatuses for generating hydrogen are known as disclosed in Japanese Unexamined Patent Publication No. 2004-063 127, Japanese Unexamined Patent Publication No. 2004-059 340, and the like. These apparatuses generate hydrogen by decomposing carbon hydride. The hydrogen generating apparatuses of the prior arts are configured by a cylindrical supplier and a cylindrical heat reactor.

A hydrogen gas generating unit disclosed in Japanese Unexamined Patent Publication No. 2004-149 394 includes a tank for accommodating water (correspond to reaction liquid), a reaction container for accommodating metal (correspond to hydrogen generating agent) that generates hydrogen through a chemical reaction with water, heating means arranged proximate to the reaction container, an introduction pipe for introducing water accommodated in the tank to the reaction container, a return pipe for introducing hydrogen generated in the reaction container and nonreactive water into the tank, and an emission pipe for emitting hydrogen and water in the tank.
A pump is used to introduce the water in the tank to the reaction container, so that amount of water to be supplied to the reaction container can be controlled. The reaction container is accommodated in an apparatus body, and is closely attached and held by the heating means. Thus, the water introduced into the reaction container is heated to become water vapor, and the reaction to generate the hydrogen gas in the reaction container can be promoted.

### DISCLOSURE OF THE INVENTION

### PROBLEMS TO BE SOLVED BY THE INVENTION

It is sometimes desired to control the amount of water to be fed into the reaction container constant in the hydrogen generating apparatus described above. The hydrogen gas is generated in a larger amount than necessary if a large amount of water is fed. The pump is preferably used in order to control (limit) the water feeding amount, but a space for accommodating the pump or a mechanism for driving the same become necessary, whereby the cost increases and the apparatus tends to become larger. In particular, a configuration that realizes miniaturization as much as possible is demanded when incorporating the hydrogen generating apparatus in portable equipments such as a laptop, a PDA, a portable telephone, and the like.
That is, a hydrogen generating apparatus equipped with a compact liquid supply device capable of supplying water without using a pump is desired. The amount of water to be fed into the reaction container is very small (e.g., 2 to 3 cm³ per hour) in the case of hydrogen generating apparatus for portable equipments, and a configuration that enables such small amount of water to be fed at a constant rate is desired.

Furthermore, a configuration that enables water to be fed at a constant rate regardless of the orientation even if an accommodating unit is turned upside down when accommodating water in the accommodating unit is desired.

In view of the above situations, it is an object of the present invention to provide a liquid constant-rate emitting apparatus and a method of liquid constant-rate emission that can feed liquid such as water at a constant rate even if of a small amount when feeding the liquid from a liquid accommodating container.

Another object of the present invention is to provide a liquid constant-rate emitting apparatus and a method of liquid constant-rate emission that can feed liquid such as water at a constant rate even if of a small amount when feeding the liquid from a liquid accommodating container, and that can feed liquid without being influenced by orientation.

### MEANS FOR SOLVING THE PROBLEMS

In order to solve the above problems, a liquid constant-rate emitting apparatus according to the present invention includes a liquid accommodating container for accommodating liquid; a liquid emitting path for emitting the liquid from the liquid accommodating container; a gas accommodating container for accommodating compressed gas; and a gas supply path for supplying the compressed gas in the gas accommodating container into the liquid accommodating container; wherein the liquid is emitted at a constant rate from the liquid emitting path by applying the compressed gas on the liquid in the liquid accommodating container.

The operation and effect of the liquid constant-rate emitting apparatus having the above configuration will be described. This apparatus includes the liquid accommodating container accommodating liquid and the gas accommodating container accommodating compressed gas, and the containers are connected by the gas supply path. The liquid in the liquid accommodating container is emitted (fed) from the liquid emitting path, where the compressed gas is applied on the liquid to carry out such emission.
The pressure is uniformly applied on the liquid surface in the liquid accommodating container by applying the compressed gas, so that the liquid can be emitted at a constant rate from the liquid emitting path even in the case of a small amount. The emission amount can be adjusted by a pressure value or the like by the compressed gas. As a result, a liquid constant-rate emitting apparatus that can feed liquid such as water at a constant rate even if of a small amount when feeding the liquid from a liquid accommodating container is obtained.

In the present invention, a movable partition wall is arranged to partition the inside of the liquid accommodating container, where the liquid is preferably accommodated on one side partitioned by the movable partition wall and the compressed gas is introduced to the other side.

According to such a configuration, when applying the compressed gas, direct application on the liquid surface is not made but application is made through the movable partition wall. Thus, the entire liquid surface can be uniformly pressed, and a small amount of liquid can be emitted at a constant rate.

A control mechanism for controlling a gas supply amount is preferably arranged in the gas supply path according to the present invention.

The gas supply amount can be controlled by arranging such a control mechanism, and the pressure value to be applied on the liquid can be changed. The amount of liquid to be fed from the liquid emitting path thus can be adjusted.

In the present invention, the liquid is preferably a reaction liquid that generates hydrogen gas by reacting with a hydrogen generating agent, and the reaction liquid emitted from the liquid emitting path is preferably supplied to a reaction container accommodating the hydrogen generating agent.

The water in the liquid accommodating container thus can be supplied to the reaction container at a constant rate. Furthermore, even a very small amount of water can be continuously supplied at a constant rate, and thus control can be carried out such that an appropriate amount of hydrogen gas is generated in the reaction container. Therefore, it can be suitably employed in a fuel battery system used particularly in portable equipments.

In order to solve the above problems, a method of liquid constant-rate emission according to the present invention includes the steps of applying compressed gas on liquid accommodated in a liquid accommodating container; and emitting at a constant rate the liquid from the liquid accommodating container by the application of the compressed gas.

According to such a configuration, as described above, the pressure is uniformly applied on the liquid surface in the liquid accommodating container by applying the compressed gas, so that the liquid can be emitted at a constant rate from the liquid emitting path even in the case of a small amount. The emission amount can be adjusted by a pressure value or the like by the compressed gas. As a result, a method of liquid constant-rate emission that can feed liquid such as water at a constant rate even if of a small amount when feeding the liquid from a liquid accommodating container is obtained.

In the present invention, the liquid is preferably a reaction liquid that generates hydrogen gas by reacting with a hydrogen generating agent; and the method preferably further includes the step of supplying the reaction liquid emitted from the liquid accommodating container to a reaction container accommodating the hydrogen generating agent.

According to such a configuration, even a very small amount of water can be continuously supplied at a constant rate, and thus control can be carried out such that an appropriate amount of hydrogen gas is generated in the reaction container.

In order to solve another problem according to the present invention, a liquid constant-rate emitting apparatus according to the present invention includes a liquid accommodating container for accommodating liquid; a liquid emitting path for emitting the liquid from the liquid accommodating container; a gas accommodating container for accommodating compressed gas; a gas supply path for supplying the compressed gas in the gas accommodating container into the liquid accommodating container; and a bag member having expansibility attached to the end of the gas supply path on the liquid accommodating container side; wherein the bag member is expanded in the liquid accommodating container by supplying the compressed gas into the bag member, so that the liquid is emitted from the liquid emitting path by an expanded volume of the bag member.

The operation and effect of the liquid constant-rate emitting apparatus having the above configuration will be described. This apparatus includes the liquid accommodating container accommodating liquid, and the gas accommodating container accommodating compressed gas, and the containers are connected by the gas supply path. The liquid in the liquid accommodating container is emitted (fed) from the liquid emitting path, where the compressed gas is applied on the liquid to carry out such emission.
The bag member is attached to the end of the gas supply path on the liquid accommodating container side, and the compressed gas is gradually fed into the bag member. The bag member has expansibility, and thus gradually expands when the compressed gas is fed thereto. The liquid of the expanded volume is emitted from the liquid emitting path when the bag member expands in the liquid accommodating container. Thus, the pressure is uniformly applied on the liquid in the liquid accommodating container by applying the compressed gas through the bag member, so that the liquid can be emitted at a constant rate from the liquid emitting path even in the case of a small amount.
Since pressure is applied on the liquid by the bag member, the same pressure can be applied on the liquid regardless of the orientation of the liquid constant-rate emitting apparatus. As a result, a liquid constant-rate emitting apparatus that can feed liquid such as water at a constant rate even if of a small amount when feeding the liquid from a liquid accommodating container, and that can feed liquid without being influenced by orientation is obtained.

In the present invention, a control mechanism for controlling a gas supply amount is preferably arranged in the gas supply path.

The gas supply amount can be controlled by arranging such a control mechanism, and the pressure value to be applied on the liquid can be changed. The amount of liquid to be fed from the liquid emitting path thus can be adjusted.

In the present invention, the liquid is preferably a reaction liquid that generates hydrogen gas by reacting with a hydrogen generating agent, and the reaction liquid emitted from the liquid emitting path is preferably supplied to a reaction container accommodating the hydrogen generating agent.

The water in the liquid accommodating container thus can be supplied to the reaction container at a constant rate. Furthermore, even a very small amount of water can be continuously supplied at a constant rate, and thus control can be carried out such that an appropriate amount of hydrogen gas is generated in the reaction container. Therefore, it can be suitably employed in a fuel battery system used particularly in portable equipments.

In order to solve the above problem, a method of liquid constant-rate emission according to the present invention includes the steps of applying compressed gas on liquid accommodated in a liquid accommodating container through a gas supply path; and emitting the liquid from a liquid emitting path arranged in the liquid accommodating container by the application of the compressed gas; wherein in the step of applying the compressed air, the compressed gas is supplied into a bag member having expansibility attached to the end of the gas supply path on the liquid accommodating container side to expand the bag member in the liquid accommodating container, so that the liquid is emitted from the liquid emitting path by an expanded volume of the bag member.

With this configuration, as described above, the pressure is uniformly applied on the liquid in the liquid accommodating container by applying the compressed gas through the bag member, so that the liquid can be emitted at a constant rate from the liquid emitting path even in the case of a small amount. Since pressure is applied on the liquid by the bag member, the same pressure can be applied on the liquid regardless of the orientation of the liquid constant-rate emitting apparatus.

In the present invention, the liquid is preferably a reaction liquid that generates hydrogen gas by reacting with a hydrogen generating agent; and the method preferably further includes the step of supplying the reaction liquid emitted from the liquid accommodating container to a reaction container accommodating the hydrogen generating agent.

According to such a configuration, even a very small amount of water can be continuously supplied at a constant rate, and thus control can be carried out such that an appropriate amount of hydrogen gas is generated in the reaction container.

### BRIEF DESCRIPTION OF THE DRAWINGS

- Fig. 1: is a conceptual view showing a configuration of a liquid constant-rate emitting apparatus according to a first embodiment.
- Fig. 2: is a conceptual view showing a configuration of a liquid constant-rate emitting apparatus according to a second embodiment.
- Fig. 3: is a view showing a configuration of a spring type (comparative example).
- Fig. 4: is a graph showing an experimental result.
- Fig. 5: is a conceptual view showing a configuration of a liquid constant-rate emitting apparatus according to a third embodiment.
- Fig. 6: is a view showing a configuration of an air injecting part.
- Fig. 7: is a conceptual view showing a configuration of a liquid constant-rate emitting apparatus according to a fourth embodiment.
- Fig. 8: is a conceptual view showing a variant of the liquid constant-rate emitting apparatus according to the fourth embodiment.
- Fig. 9: is a view showing another embodiment of a safety valve.
- Fig. 10: is a conceptual view showing a configuration of a liquid constant-rate emitting apparatus according to a fifth embodiment.
- Fig. 11: is a view describing the effect of a bag member.
- Fig. 12: is a view showing a state in which the liquid constant-rate emitting apparatus is turned upside down.

### DESCRIPTION OF SYMBOLS

- 1: gas accommodating container
- 2: liquid accommodating container
- 3: reaction container
- 6: introduction pipe
- 7: valve
- 10: hydrogen generating agent
- 11: water lead-out pipe
- 12: check valve
- 14: movable partition wall
- 30: check valve
- 33: safety valve
- 40: cooling chamber
- B: injection valve
- W: water surface

### BEST MODE FOR CARRYING OUT THE INVENTION

Suitable embodiments of the liquid constant-rate emitting apparatus and the method of liquid constant-rate emission according to the present invention will be described using the figures.

### First Embodiment

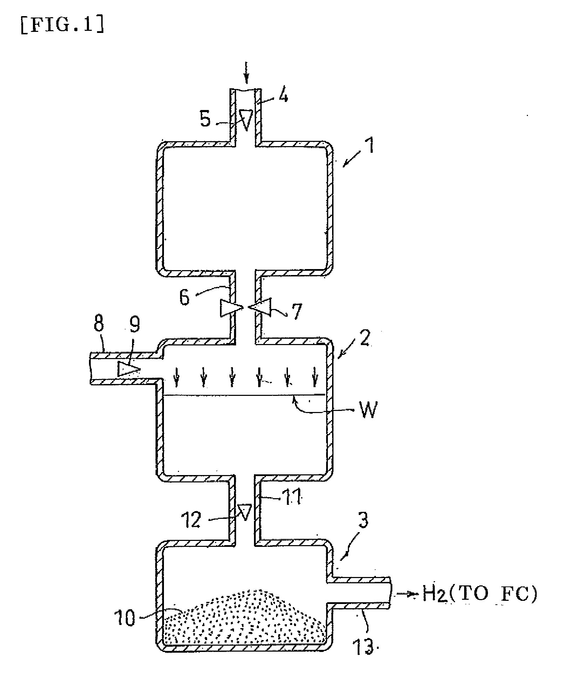

Fig. 1 is a conceptual view showing a configuration of a liquid constant-rate emitting apparatus according to a first embodiment. The liquid constant-rate emitting apparatus includes a gas accommodating container 1 and a liquid accommodating container 2. The gas accommodating container 1 accommodates compressed air. Other gases such as nitrogen may be used instead of air. An introduction pipe 4 and a check valve 5 are arranged on an upper wall surface of the gas accommodating container 1, where air is introduced into the gas accommodating container 1 through the introduction pipe 4.
The amount of introduced air is about 3 cm³, for example, and is accommodated in a state compressed to about three barometric pressure. An arbitrary type of check valve 5 may be used, where a check valve having a beak shaped elastic member that opens when the pressure on a primary side is greater than a secondary side and that closes when smaller is preferable in terms of miniaturizing the entire apparatus. The check valve 5 is called a duckbill and various types are commercially available. This is the same for the check valves used in other places.

Water serving as the reaction liquid is accommodated in the liquid accommodating container 2. The water functions as a reaction liquid that reacts with a hydrogen generating agent to generate hydrogen gas, where solution of acid or alkali may be used in addition to the water. The amount of water accommodated in the liquid accommodating container 2 is also about 3 cm³. An introduction pipe 8 and a check valve 9 are arranged on the container wall surface, where water is introduced into the liquid accommodating container 2 through the introduction pipe 8.

The gas accommodating container 1 and the liquid accommodating container 2 are connected by a communication pipe 6 which is a gas supply path, and a valve 7 is arranged in the middle of the communication pipe 6. The valve 7 functions as a control mechanism for controlling the amount of compressed air that passes through the communication pipe 6, where the valve 7 is closed in the event of introducing air into the gas accommodating container 1. The air in the gas accommodating container 1 is introduced into the liquid accommodating container 2 by opening the valve 7, thereby pressing the water surface W.

A hydrogen generating agent 10 is accommodated in a reaction container 3. The hydrogen generating agent 10 may be metal that generates hydrogen gas by reacting with the reaction liquid such as water, particles of one or more types of metal selected from Fe, Al, Mg, Zn, Si, and the like, and particles of metal in which the above mentioned metals are partially oxidized. The hydrogen generating agent 10 may be that which contains a catalytic component or an alkaline-earth metal oxide, a carbon black, or the like. The hydrogen generating agent 10 may be in the form of powder, granulate, or tablet.

The reaction container 3 and the liquid accommodating container 2 are connected by a water lead-out pipe 11 and a check valve 12. Therefore, the water pressed by the compressed air is fed into the reaction container 3 through the water lead-out pipe 11. The introduced water will not backflow or the hydrogen gas generated in the reaction container 3 will not enter the liquid accommodating container 2 side due to the arrangement of the check valve 12. The hydrogen gas generated in the reaction container 3 is emitted from a gas supply pipe 13, and supplied to a fuel battery cell (not shown).

The gas accommodating container 1, the liquid accommodating container 2, and the reaction container 3 can be made of an appropriate metal material, resin material, glass, or the like in view of strength and corrosion resistance. Whether to configure each container with one component or with a plurality of components is arbitrary. The shape and the size of each container are appropriately defined based on the purpose of use, specification, etc.
Furthermore, a reasonable arrangement configuration can be appropriately adopted in view of size, design, and the like of the entire apparatus with respect to the arrangement of each container. Each pipe for passing liquid or gas can be made of an appropriate metal material or resin material, and a material having flexibility can be selected as necessary.

According to the liquid constant-rate emitting apparatus according to the present invention, the compressed air is accommodated in the gas accommodating container 1 with the valve 7 closed, and thereafter, the valve 7 is opened by a predetermined amount to feed the compressed air into the liquid accommodating container 2. The water surface W of the water in the liquid accommodating container 2 is thereby pressed by the compressed air, and the water is emitted from the water lead-out pipe 11 into the reaction container 3 by such a pressing effect.
Since the water surface W is pressed by the compressed air, a uniform and stable pressure is applied over the entire water surface, whereby water of a constant amount can be constantly fed from the water lead-out pipe 11. Thus, even in the event of a small amount of 2 to 3 cm³ per hour, a constant amount is stably fed by applying a pressing force from the compressed air. The water surface W lowers as the water is gradually emitted, and the compressed air is fed from the gas accommodating container 1 side into the liquid accommodating container 2 by the relevant amount.

### Second Embodiment

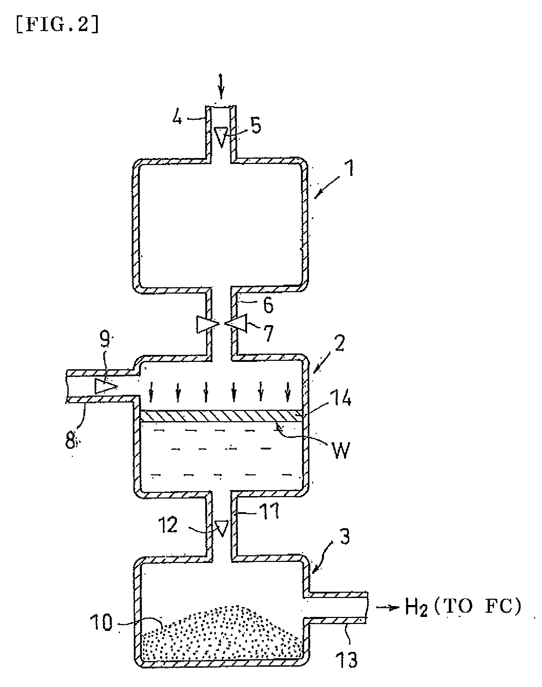

The configuration of a liquid constant-rate emitting apparatus according to the second embodiment will now be described with Fig. 2. The difference with Fig. 1 will be chiefly described. In Fig. 2, a movable partition wall 14 arranged to partition the liquid accommodating container 2 is arranged inside the liquid accommodating container 2. As shown in the figure, the movable partition wall 14 is arranged on the water surface W, so that the surface on the side opposite to the water surface W of the movable partition wall 14 is pressed by the compressed air. The water surface W is more uniformly pressed by arranging the movable partition wall 14, and the water is emitted at a constant rate in a more stable state.

The movable partition wall 14 is a plate shaped member that can be made of an appropriate material, where glass with satisfactory slidability or the like can be used. Even if the orientation of the liquid accommodating container 2 is turned upside down, the water will not turn over due to the arrangement of the movable partition wall 14 since the entire surface of the movable partition wall 14 is pressed by compressed air.

### Experimental Results

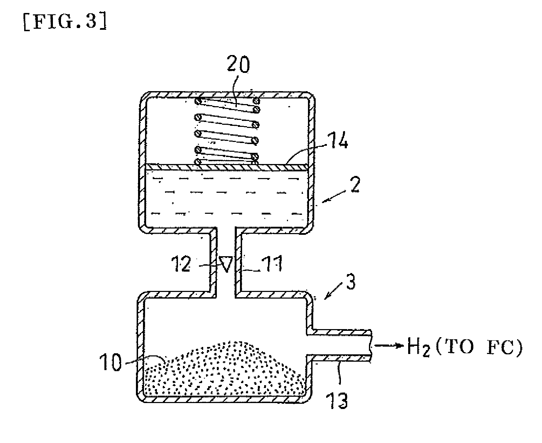

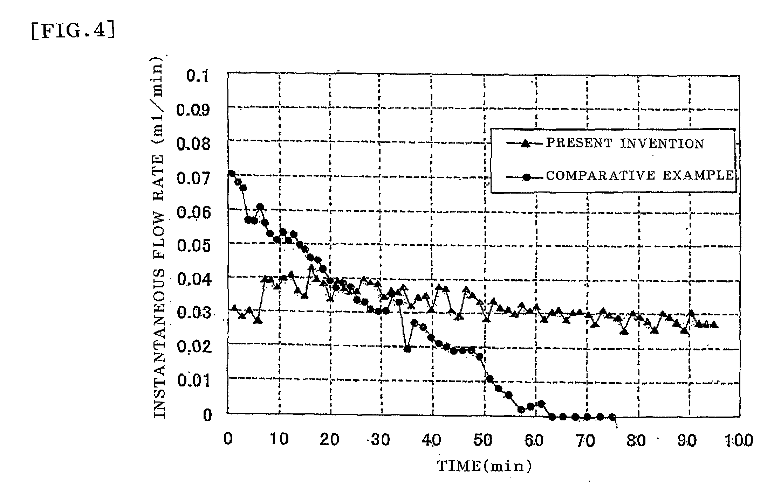

Experiments were conducted to confirm the effect of the configuration according to the present invention. As a comparative example to the present invention, an experiment was conducted with a method of pressing with a spring. A configuration view of the spring type is as shown in Fig. 3, where a configuration in which a coil spring 20 acts on the movable partition wall 14 is shown. A valve is set so that water of 0.04 ml per one minute is emitted from the liquid accommodating container. The experimental results are shown in Fig. 4.

As shown in Fig. 4, the emission amount of water is not stable in the case of spring type, and the emission amount tends to decrease with elapse of time. In the present invention, on the other hand, the water is emitted in a substantially stable state irrespective of elapse of time. Therefore, it is confirmed that a small amount of water can be fed at a constant rate.

### Third Embodiment

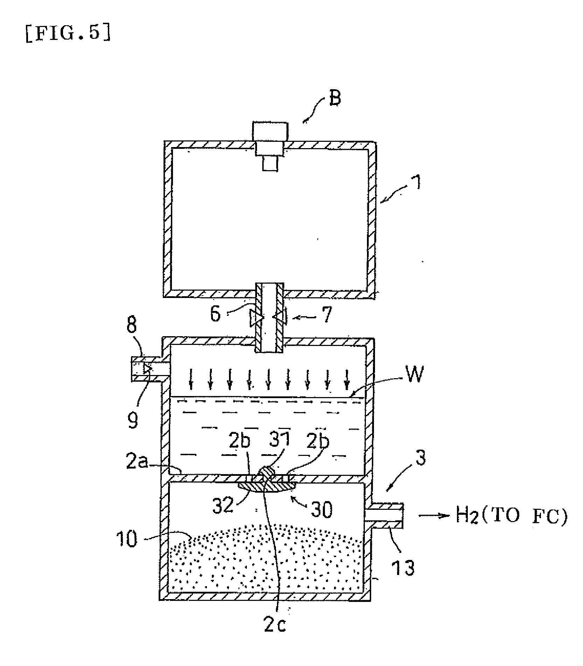

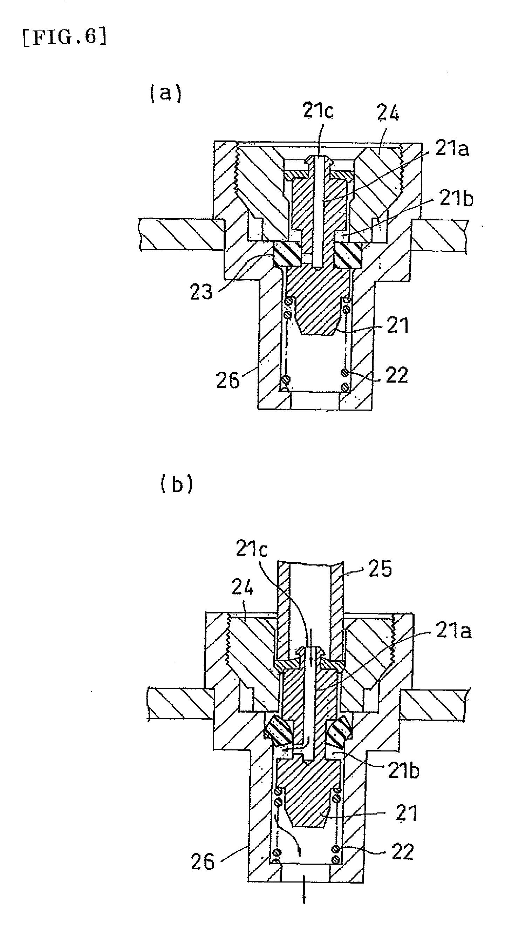

The configuration of a liquid constant-rate emitting apparatus according to a third embodiment will be described with Figs. 5 and 6. Description will be made chiefly on the difference with the first embodiment and the second embodiment. A configuration of an injection valve B for injecting the compressed air into the gas accommodating container 1 will be described.
When using the liquid constant-rate emitting apparatus for a fuel battery to be used in the portable equipment, miniaturization is demanded in the liquid constant-rate emitting apparatus, and the injection valve B itself is preferably made as small as possible. In such an application, the compressed air to be injected is 2 cm³ to 3 cm³, and the pressure is about 0.3 MPa to 0.5 MPa.

The injection valve B having a structure the same as the valve used to inject gas to a gas lighter can be used. The configuration thereof is shown in Fig. 6, where Fig. 6(a) shows a state in which the valve is closed, and Fig. 6(b) shows a state in which the valve is opened to inject air.

As shown in Fig. 6, a movable valve body 21 movable along a center axis of a valve supporting body 26 is arranged, and is biased in a closing direction by a spring 22. An air passage 21a is formed inside the movable valve body 21. A groove 21 b is formed at a central part in the axial direction of the movable valve body 21, and a seal member 23 is fitted thereto. An air injecting part 21c is arranged at the end of the movable valve body 21. The movable valve body 21 is supported inside the valve supporting body 26 by a valve lid 24.

When injecting compressed air into the gas accommodating container 1, the movable valve 21 is pressed by an air cylinder 25 as shown in Fig. 6(b). The air passage 21a in the movable valve body 21 thereby communicates with the inside of the gas accommodating container 1 and enables the air to be injected.

A check valve 30 arranged on a partition wall 2a of the liquid accommodating container 2 and the reaction container 3 will now be described. The check valve 30 called an umbrella is used. The check valve 30 is a rubber product in which an engagement part 31 and an umbrella part 32 are integrally molded, and is deformable by pressure. The engagement part 31 engages an engagement hole 2c formed in the partition wall 2a.
A communication hole 2b is formed adjacent to the engagement hole 2c, and water is supplied to the reaction container 3 through the communication hole 2b. That is, when the water surface W is pressed by the pressure of the compressed air, the umbrella part 32 deforms through the communication hole 2b, and the water is supplied at a constant rate to the reaction container 3.

### Fourth Embodiment

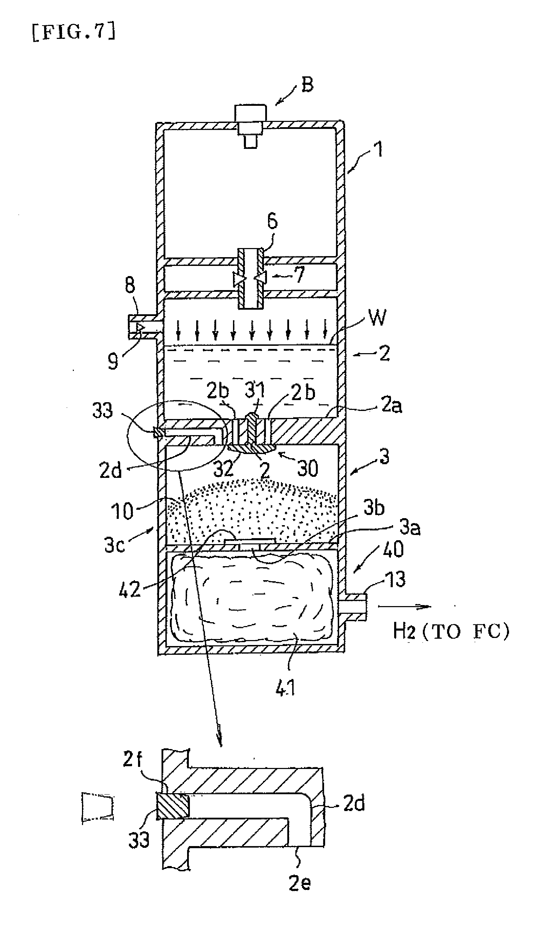

A configuration of a liquid constant-rate emitting apparatus according to a fourth embodiment will now be described with Fig. 7. The fourth embodiment has a structure similar to the third embodiment, and the difference with the third embodiment will be chiefly described.
In this embodiment, a pressure escape passage 2d is formed in the partition wall 2a, where one end 2e of the passage 2d is connected to the inside of the reaction container 3, and the other end 2f is connected to outside air. A safety valve 33 is press-fitted to the other end 2f. When water is supplied into the reaction container 3 in excess and great amount of hydrogen is generated, the safety of the apparatus can be ensured by escaping pressure.

The size of the passage 2d is set to a diameter of about 2.5 mm, and a silicon rubber molded to a circular cone shape is formed as the safety valve 33. The safety valve 33 can be attached by being press-fitted to the other end 2f of the passage 2d, and the magnitude of the pressure value is preferably set to about 0.5 to 2 N.

A cooling chamber 40 is arranged underneath the reaction container 3, and cotton 41 (absorbent cotton or the like) impregnated in water is accommodated therein. A communication hole 3b is formed in a partition wall 3a of the reaction container 3 and the cooling chamber 40, where the hydrogen gas generated in the reaction container 3 is supplied to the cooling chamber 40 through the communication hole 3b, and emitted from the gas supply pipe 13 in a cooled state. A non-woven cloth 42 is arranged so as to cover the communication hole 3b, thereby preventing the hydrogen generating agent from falling into the cooling chamber 40.

According to the configuration described above, when the pressure in the reaction container 3 rises, the safety valve 33 drops off from the other end 2f of the passage 2d, thereby escaping the pressure inside. Accordingly, the safety of when hydrogen is generated more than necessary can be ensured. A simple configuration of press fitting rubber is adopted in the present embodiment for the configuration of the safety valve 33, but a safety valve of other configurations may be adopted.
For instance, a lid member for closing the passage 2d and a spring biasing in a direction of blocking the passage by the lid member may be arranged, so that when the pressure rises, the pressure escapes by opening the lid member against the biasing force of the spring. The passage 2d is arranged in the partition wall 2a to escape pressure in the present embodiment, but a passage may be formed in the sidewall face 3c of the reaction container 3.

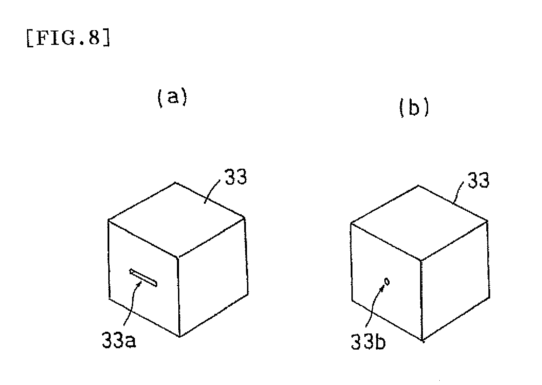

Another embodiment of the safety valve 33 made of rubber will now be described with Fig. 8. In Fig. 8(a), a slit 33a is formed in the safety valve 33, so that when the internal pressure rises, the slit 33a opens to escape the pressure. In Fig. 8(b), a pin hole 33b is formed, so that when the internal pressure similarly rises, the slit 33a opens to escape the pressure. The pin hole 33b can be formed by piercing and pulling out a needle. The structure of Fig. 8(b) is preferably changed to a new one after being operated once.

The water is accommodated in the cooling chamber 40 by being impregnated in cotton 41 in the present embodiment, but the water may be directly accommodated without using the cotton 41. In this case, a check valve is preferably appropriately arranged so that the water does not move to other regions.

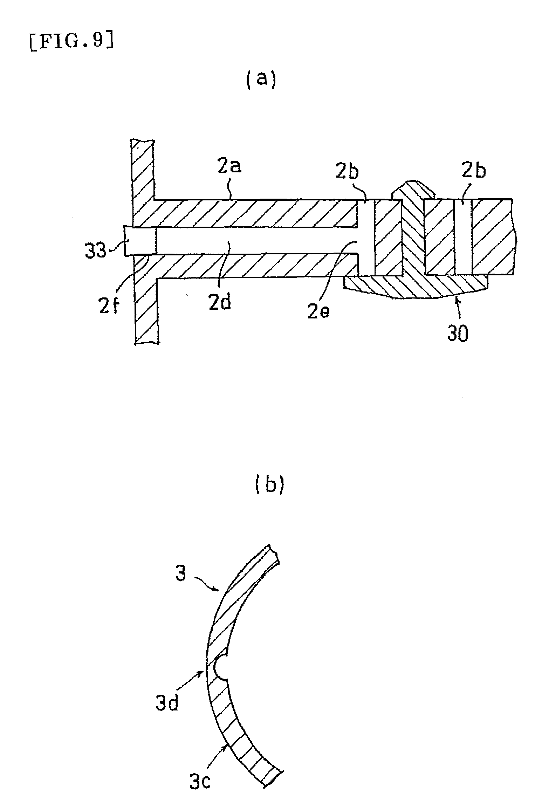

A variant of the fourth embodiment will be described with Fig. 9. In Fig. 9(a), one end of the pressure escape passage 2d is formed at the communication hole 2b for supplying water. According to this configuration, when the pressure in the reaction container 3 rises, the water supplied from the liquid accommodating container 2 can be escaped through the passage 2d. In Fig. 9(a), the passage 2d is arranged only for one communication hole 2b, but the passage 2d may be similarly arranged for the other communication hole 2b.

Fig. 9(b) is a configuration example in which a thin-thickness part 3d is partially formed at the sidewall face 3c of the reaction container 3. According to this configuration, when the pressure in the reaction container 3 rises, the internal pressure escapes by breaking the thin-thickness part 3d.

### Fifth Embodiment

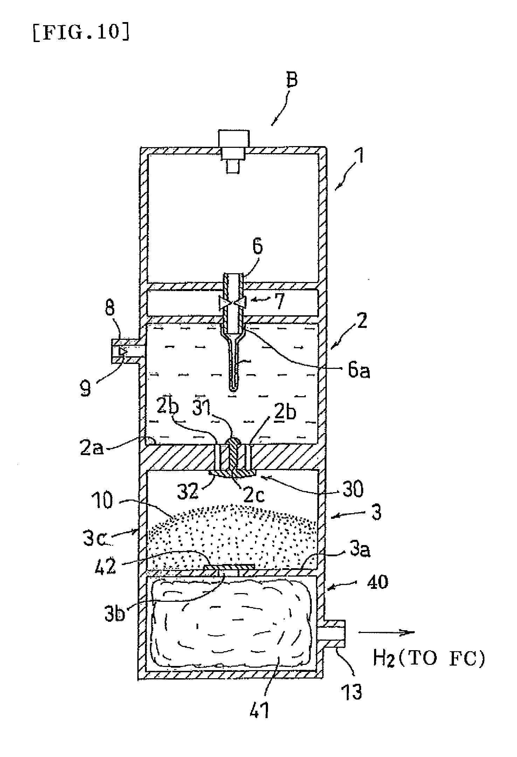

Fig. 10 is a conceptual view showing a configuration of a liquid constant-rate emitting apparatus according to a fifth embodiment. The fifth embodiment is a structure similar to the fourth embodiment, and the difference with the fourth embodiment will be chiefly described. The liquid constant-rate emitting apparatus includes the gas accommodating container 1, the liquid accommodating container 2, the reaction container 3, and the cooling chamber 40.
The gas accommodating container 1 accommodates compressed air. Other gases such as nitrogen may be used instead of air. An injection valve B is arranged at the upper wall face of the gas accommodating container 1, and air is introduced into the gas accommodating container 1 through the injection valve B. The amount of introduced air is about 2 cm³ to 3 cm³, and is accommodated with the air pressure compressed to about 0.3 to 0.5 MPa. The injection valve B of the same structure as the valve used to inject gas to the gas lighter may be used.

An arbitrary type of check valve 9 may be used, where a check valve having a beak shaped elastic member that opens when the pressure on a primary side is larger than a secondary side and closes when smaller is preferable in terms of miniaturizing the entire apparatus. This check valve 9 is called a duckbill and various types are commercially available. This is the same for the check valves used in other places.

An end 6a of the communication pipe 6 is inserted to the liquid accommodating container 2, and in turn, a bag member 15 is securely attached to the end 6a. Therefore, the compressed air fed through the communication pipe 6 is fed into the bag member 15, thereby gradually expanding the bag member 15. The bag member 15 is made of material having expansibility. The bag member 15 may be formed using thermoplastic resin such as urethane resin, thermosetting resin such as silicon rubber, natural rubber, or the like.
The bag member 15 may be a non-elastic body as long as it has expansibility. The air in the gas accommodating container 1 is introduced into the liquid accommodating container 2 by opening the valve 7, and the bag member 15 expands thereby applying pressure on the water in the liquid accommodating container 2.

A check valve 30 arranged on the partition wall 2a of the liquid accommodating container 2 and the reaction container 3 will now be described. The check valve 30 called an umbrella is used. The check valve 30 is a rubber product in which the engagement part 31 and the umbrella part 32 are integrally molded, and is deformable by pressure. The engagement part 31 engages an engagement hole 2c formed in the partition wall 2a.
A communication hole 2b (correspond to liquid emitting path) is formed adjacent to the engagement hole 2c, and water is supplied to the reaction container 3 through the communication hole 2b. That is, when pressure applies on the water by the pressure of the compressed air, the umbrella part 32 deforms through the communication hole 2b, and the water is supplied at a constant rate to the reaction container 3.

The cooling chamber 40 is arranged underneath the reaction container 3, and cotton 41 (absorbent cotton or the like) impregnated in water is accommodated therein. A communication hole 3b is formed in the partition wall 3a of the reaction container 3 and the cooling chamber 40, where the hydrogen gas generated in the reaction container 3 is supplied to the cooling chamber 40 through the communication hole 3b, and emitted from the gas supply pipe 13 in a cooled state.
A non-woven cloth 42 is arranged so as to cover the communication hole 3b, thereby preventing the hydrogen generating agent from falling into the cooling chamber 40. The hydrogen gas generated in the reaction container 3 is emitted from the gas supply pipe 13, and supplied to the fuel battery cell (not shown).

The gas accommodating container 1, the liquid accommodating container 2, the reaction container 3, and the cooling chamber 40 can be made of an appropriate metal material, resin material, glass, and the like in view of strength and corrosion resistance. Whether to configure each container with one component or with a plurality of components is arbitrary. A plurality of containers may be configured with one component.

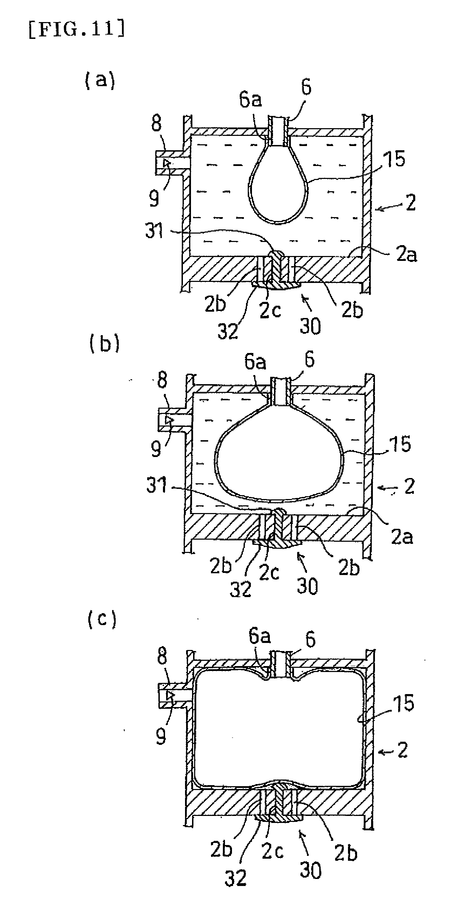

According to the liquid constant-rate emitting apparatus of the present invention, the compressed air is accommodated in the gas accommodating container 1 with the valve 7 closed, and thereafter, the valve 7 is opened by a predetermined amount to feed the compressed air into the bag member 15 in the liquid accommodating container 2. The compressed air is gradually fed into the bag member 15, and the bag member 15 gradually expands. The course of expansion is shown in Fig. 11(a)→11(b)→11(c). As the bag member 15 expands, the water in the liquid accommodating container 2 is pushed out towards the reaction container 3 by the expanded volume.

Since water is pressed by the compressed air, a uniform and stable pressure is applied over the entire water, whereby water of a constant amount can be constantly fed from the communication pipe 2b. Thus, even in the event of a small amount of 2 cm³ to 3 cm³ per hour, a constant amount is stably fed by applying the pressing force from the compressed air.

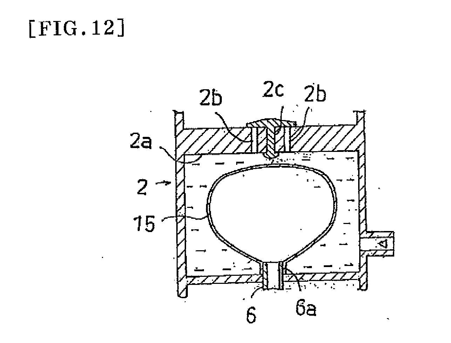

Fig. 12 shows a state in which the liquid constant-rate emitting apparatus is turned upside down, but even in such a case, there are no adverse affect on the ability to supply the water at a constant rate since the water is equally pressed by the compressed air through the bag member 15. Therefore, the liquid constant-rate emitting apparatus according to the present invention supplies water at a constant rate regardless of the orientation of the apparatus.

### Other Embodiments

Various embodiments have been described regarding the liquid constant-rate emitting apparatus according to the present invention. The configuration adopted in each of such embodiments can be appropriately adopted in other embodiments.

In the present embodiment, a fuel battery is given by way of example for the application of the liquid constant-rate emitting apparatus (method), but it is not limited thereto, and can be used in other applications.

In the present embodiment, supply of water to the reaction container 3 is carried out through the communication hole 2b and the safety valve 30, but in place thereof, the liquid emitting path may be formed by a combination of an introduction pipe and a check valve.

The water is accommodated in the cooling chamber 40 by being impregnated in cotton 41 in the present embodiment, but the water may be directly accommodated without using the cotton 41. In this case, the check valve is preferably appropriately arranged so that the water does not move to other regions.

In the present embodiment, a fuel battery is given by way of example for the application of the liquid constant-rate emitting apparatus (method), but it is not limited thereto, and can be used in other applications.

## Claims

1. A liquid constant-rate emitting apparatus comprising:
- a liquid accommodating container for accommodating liquid;
- a liquid emitting path for emitting the liquid from the liquid accommodating container;
- a gas accommodating container for accommodating compressed gas; and
- a gas supply path for supplying the compressed gas in the gas accommodating container into the liquid accommodating container;
- wherein the liquid is emitted at a constant rate from the liquid emitting path by applying the compressed gas on the liquid in the liquid accommodating container.

2. The liquid constant-rate emitting apparatus according to claim 1,
wherein a movable partition wall is arranged to partition the inside of the liquid accommodating container, the liquid being accommodated on one side partitioned by the movable partition wall and the compressed gas being introduced to the other side.

3. The liquid constant-rate emitting apparatus according to claim 1,
wherein a control mechanism for controlling a gas supply amount is arranged in the gas supply path.

4. The liquid constant-rate emitting apparatus according to claim 1,
wherein the liquid is a reaction liquid that generates hydrogen gas by reacting with a hydrogen generating agent, and the reaction liquid emitted from the liquid emitting path is supplied to a reaction container accommodating the hydrogen generating agent.

5. A method of liquid constant-rate emission comprising the steps of:
- applying compressed gas on liquid accommodated in a liquid accommodating container; and
- emitting at a constant rate the liquid from the liquid accommodating container by the application of the compressed gas.

6. The method of liquid constant-rate emission according to claim 5,
wherein the liquid is a reaction liquid that generates hydrogen gas by reacting with a hydrogen generating agent; and
wherein the method further includes the step of supplying the reaction liquid emitted from the liquid accommodating container to a reaction container accommodating the hydrogen generating agent.

7. A liquid constant-rate emitting apparatus comprising:
- a liquid accommodating container for accommodating liquid;
- a liquid emitting path for emitting the liquid from the liquid accommodating container;
- a gas accommodating container for accommodating compressed gas;
- a gas supply path for supplying the compressed gas in the gas accommodating container into the liquid accommodating container; and
- a bag member having expansibility attached to an end of the gas supply path on the liquid accommodating container side;
- wherein the bag member is expanded in the liquid accommodating container by supplying compressed air into the bag member, so that the liquid is emitted from the liquid emitting path by an expanded volume of the bag member.

8. The liquid constant-rate emitting apparatus according to claim 7,
wherein a control mechanism for controlling a gas supply amount is arranged in the gas supply path.

9. The liquid constant-rate emitting apparatus according to claim 7,
wherein the liquid is a reaction liquid that generates hydrogen gas by reacting with a hydrogen generating agent, and the reaction liquid emitted from the liquid emitting path is supplied to a reaction container accommodating the hydrogen generating agent.

10. A method of liquid constant-rate emission comprising the steps of:
- applying compressed gas on liquid accommodated in a liquid accommodating container through a gas supply path; and
- emitting the liquid from a liquid emitting path arranged in the liquid accommodating container by the application of the compressed gas;
- wherein in the step of applying the compressed gas, the compressed gas is supplied into a bag member having expansibility attached to an end of the gas supply path on the liquid accommodating container side to expand the bag member in the liquid accommodating container, so that the liquid is emitted from the liquid emitting path by an expanded volume of the bag member.

11. The method of liquid constant-rate emission according to claim 10,
wherein the liquid is a reaction liquid that generates hydrogen gas by reacting with a hydrogen generating agent; and
wherein the method further includes the step of supplying the reaction liquid emitted from the liquid accommodating container to a reaction container accommodating the hydrogen generating agent.
